# NEW EUROPEAN PATENT SPECIFICATION

(11) **EP 0 236 593 B2**
(45) Date of publication and mention of the opposition decision: **12.06.2002**
(45) Mention of the grant of the patent: 26.06.1991
(21) Application number: 86202277.9
(22) Date of filing: 16.12.1986
(51) Int. Cl.: C08L 71/12, C08L 77/00, C08L 57/00

(54) **Polymer mixture which comprises a polyamide, a polyphenylene ether and an agent to improve the impact strength**
Polymermischung, die ein Polyamid, einen Polyphenylenether und einen schlagzähmachenden Hilfsstoff enthält
Mélange de polymères contenant un polyamide, un poly(éther de phénylène) et un agent qui améliore la résistance au choc

(30) Priority: 27.01.1986 NL 8600166
(43) Date of publication of application: 16.09.1987
(73) Proprietor: GENERAL ELECTRIC COMPANY, Schenectady New York 12305 (US)
(72) Inventor: Van Der Meer, Roelof, NL-4600 AC Bergen op Zoom (NL); Hobbs, Stanley Y., Pittsfield Massachusetts 01201 (US)
(74) Representative: Grever, Frederik

(56) References cited:
- EP-A- 0 024 120
- EP-A- 0 046 040
- EP-A- 0 142 166
- EP-A- 0 147 874
- EP-A- 0 164 767
- WO-A-85/05372
- JP-A- 8 466 452
- US-A- 4 191 685
- Encyclopedia Chimica 3, pages 21, 22
- Encyclopedia Chimica 1, pages 48, 49
- Beyer / Walter:"Lehrbuch der organischen Chemie" S.Hirzel Verlag, Stuttgart 1984, page 314
- E.H. Rodd Chemistry of Carbon Compounds Vol.1, part B, pages 1101-5
- Kirk-Othmer Encycl.of Chem.Techn. Vol.12, pages 837-845
- JP-A-84/66452 (partial translation)

## Description

The invention relates to a polymer mixture comprising 5-93% of polyamide(s), 93-5% polyphenylene ether(s), 1-50% of an agent to improve the impact strength of polyphenylene ether(s) and 1-50% of an agent not particularly suitable to improve the impact strength of polyphenylene ether(s), but suitable to improve the impact strength of polyamide(s), the percentages being calculated by weight with respect to the sum of the quantities by weight of polyamide(s), polyphenylene ether(s), and impact strength improving agents; and comprising as an agent to improve the compatibility between the polyamide(s) and the polypehnylene ether(s) one or more of the following:
A) liquid diene polymers or compounds having in their molecular structure a two-fold or three-fold carbon-to-carbon bond and a carboxylic acid, acid anhydride, acid amide, imido, carboxylic acid ester, amino or hydroxyl group, in a quantity of from 0.01 to 30 parts by weight per 100 parts by weight of polyamide plus polyphenylene ether,
B) a functionalised polyphenylene ether consisting of the reaction product of (a) a polyphenylene ether and (b) a compound of the general formula (i)-Z-(ii), wherein (i) is at least a group of the formula [X-C(O)-⁆ with x = F, Cl, Br, I, OH, -OR, or -O-C(O)-R with R = H, alkyl or aryl, wherein (ii) is at least a carboxylic acid, acid anhydride, acid amide, imido, carboxylic acid ester, amino or hydroxyl group, and in which the groups (i) and (ii) are covalently bonded together via a bridge z, z being a bivalent hydrocarbon radical,
C) a copolymer with units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether,
D) the reaction product of a) a 1,2-substituted olefinic compound with carboxyl group or acid anhydride group, b) a polyphenylene ether and c) a radical initiator, in a quantity of from 0.5 to 150 parts by weight per 100 parts by weight of polyamide plus polyphenylene ether.

Similar blends, comprising as an agent to improve the compatibility a polycarboxylic acid are known from WO 85/05372. The use of two different types of agents to improve the impact strength does not offer a major improvement in impact strength as compared to the use of one agent only.

Polymer mixtures which comprise a polyamide, a polyphenylene ether, an agent to improve the compatibility of the polyamide and the polyphenylene ether and optionally an agent to improve the impact strength are known from EP-A 0024120; EP-A 0046040 and EP-A 0147874.

It is stated in EP-A 0024120 that it is desirable to incorporate in the polymer mixtures rubber-like polymers having a high molecular weight to improve the impact strength. By way of example are mentioned inter alia ethylene-propylene, ethylene-propylene-diene copolymers and partially hydrogenated styrene/butadiene block copolymers. There are no examples in which these rubber-like polymers are used. According to EP-A 0024120, a liquid diene compound or an epoxy compound or a compound having a two-fold or three-fold carbon-to carbon bond in the molecular structure and a carboxylic acid, acid anhydride, acid amide, imido, carboxylic acid ester, amino or hydroxyl group is used as an agent to improve the compatibility - in the meaning as will be defined hereinafter.

According to EP-A 0046040 the polymer mixtures described therein may comprise an agent improving the impact strength. In the Specification are mentioned by way of example a) graft polymers obtained by graft polymerization of a monomer which comprises as the main constituent a vinylaromatic compound on a rubber-like polymer and b) thermoplastic elastomers. One graft polymer which is mentioned by name is high-impact polystyrene. As thermoplastic elastomers are mentioned inter alia hydrogenated and non-hydrogenated styrene-butadiene block copolymers and styrene-ethylene-propylene polymers. It is stated that the graft polymer or the thermoplastic elastomer can be used individually or in combination. High-impact polystyrene having a high polybutadiene content and combinations of high-impact polystyrene and a hydrogenated styrene-butadiene block copolymer are used in the examples. One of these agents, notably the hydrogenated styrene-butadiene block copolymer, is generally considered as an agent which is particularly suitable to improve the impact strength of polyphenylene ether or of mixtures of polyphenylene ethers and high-impact polystyrene. The polymer mixtures according to EP-A 0046040 comprise a copolymer with units of a vinylaromatic compound and an alpha-beta dicarboxylic acid anhydride or an imide of an alpha-beta unsaturated dicarboxylic acid as an agent to improve the compatibility.

The polymer mixtures according to EP-A 0147874 may comprise one or more agents to improve the impact strength: mentioned by name as such are high-impact polystyrene, polybutadiene, ethylene-propylene-diene rubbers and hydrogenated or non-hydrogenated thermoplastic rubbers. This Patent Application does not give any examples in which agents improving the impact strength are used. According to this Application, a copolymer with 50-90 mol% units of a vinylaromatic compound and with 41-50 mol% units of an unsaturated dicarboxylic acid or a derivative thereof is used as an agent to improve the compatibility.

An impact strength which has been improved as compared with the just-mentioned known polymer mixtures can be obtained by means of the polymer mixtures according to the invention

The polymer mixtures of the invention comprise 5-93% of polyamide(s), 93-5% polyphenylene ether(s), 1-50% of an agent to improve the impact strength of polyphenylene ether(s) and 1-50% of an agent not particularly suitable to improve the impact strength of polyphenylene ether(s), but suitable to improve the impact strength of polyamide(s), the percentages being calculated by weight with respect to the sum of the quantities by weight of polyamide(s), polyphenylene ether(s), and impact strength improving agents: and comprise as an agent to improve the compatibility between the polyamide(s) and the polyphenylene ether(s) one or more of the following:
A) compounds having in their molecular structure a two-fold or three-fold carbon-to-carbon bond and a carboxylic acid, acid anhydride, acid amide, imido, carboxylic acid ester, amino or hydroxyl group, in a quantity of from 0.01 to 30 parts by weight per 100 parts by weight of polyamide plus polyphenylene ether,
B) a functionalised polyphenylene ether consisting of the reaction product of (a) a polyphenylene ether and (b) a compound of the general formula (i)-Z-(ii), wherein (i) is at least a group of the formula [X-C(O)] with x = F, Cl, Br, I, OH, -OR, or -O-C(O)-R with R = H, alkyl or aryl, wherein (ii) is at least a carboxylic acid, acid anhydride, acid amide, imido, carboxylic acid ester, amino or hydroxyl group, and in which the groups (i) and (ii) are covalently bonded together via a bridge Z, Z being a bivalent hydrocarbon radical.
C) a copolymer with units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether.

The invention is based on the recognition of the fact that two phases are present in the polymer mixtures which comprise a polyamide and a polyphenylene ether, and that an improved impact strength can be obtained by incorporating in both phases an agent to improve the impact strength and suitable for the phase in question, in combination with specific agents to improve the compatibility as defined herein above.

It is supposed that the first-mentioned agent to improve the impact strength improves the properties of the polyphenylene ether phase and the second mentioned agent improves those of the polyamide phase. As the second agent which likely improves the polyamide phase is to be considered any known agent to improve the impact strength of polyamides. These are generally rubber-like polymers which comprise a functional group which can react with polyamides. It has quite unexpectedly been found that rubber-like polymers which do not comprise a functional group may also be used in the polymer mixtures according to the invention as the second agent to improve the impact strength.

In the polymer mixtures according to the invention the first agent to improve the impact strength may consist of a mixture of agents which are particularly suitable to improve the impact strength of polyphenylene ethers. The second agent may also consist of a mixture of agents.

A vinylaromatic polydiene di- or triblock copolymer, in which the block copolymer is not hydrogenated or is partially hydrogenated, or a polybutadiene may be used in the polymer mixtures according to the invention as an agent to improve the impact strength of polyphenylene ethers, i.e. as the first agent to improve the impact strength.

Agents not particularly suitable to improve the impact strength of polyphenylene ethers, i.e. the second agent to improve the impact strength, is to be understood to mean any product known in polymer chemistry as an agent to improve the impact strength of polymers with the exception of high-impact polystyrene, vinylaromatic polydiene di- or triblock copolymers, in which these may be non-hydrogenated or partially hydrogenated, and polybutadiene.

As the second agent to improve the impact strength may be used in the polymer mixtures according to the invention an ethylene-propylene copolymer or an ethylene-propylene-non-conjugated diene terpolymer on which a vinylmonomer with a carboxylic acid group or a derivative thereof has been grafted or on which a vinyl monomer with an epoxy group has been grafted.

The polymer mixtures according to the invention may comprise as the second agent to improve the impact strength an ethylene-propylene copolymer or an ethylene-propylene-non-conjugated diene terpolymer on which a vinylmonomer with a carboxylic acid group or a derivative thereof has been grafted or on which a vinyl monomer with an epoxy group has been grafted.

The polymer mixtures according to the invention may comprise as the second agent to improve the impact strength an alkylene-alkyl(meth)acrylate copolymer with an alkylene group having 2-6 carbon atoms and with an alkyl group having 1-8 carbon atoms.

The polymer mixtures according to the invention may comprise as the second agent to improve the impact strength an alkylene-alkyl(meth)acrylate with functional groups, which functional groups have been introduced either by a polymerization reaction while forming a terpolymer or by a grafting reaction, the functional group being selected from carboxylic acid, acid anhydride groups, acid amide groups, imido groups, carboxylic acid ester groups, amino groups or hydroxyl groups or epoxy groups, the alkylene group of the alkylene-alkyl(meth)acrylate comprising 2-6 carbon atoms and the alkyl group thereof comprising 1-8 carbon atoms.

The polymer mixtures according to the invention may comprise as the second agent to improve the impact strength a core-shell polymer having a rubber-like core and one or more shells (core-shell polymer).

The polymer mixtures according to the invention may comprise as the second agent to improve the impact strength a core-shell polymer the outermost core of which comprises one or more functional groups selected from carboxylic acid groups, acid anhydride groups, acid amide groups, imido groups, carboxylic acid ester groups, amino groups, epoxy groups or hydroxyl groups.

The polymer mixtures according to the invention comprise one or more agents to improve the compatibility of the polyamide and the polyphenylene ether. These are to be understood to be agents which facilitate the mixing in the melt of two non-miscible polymers and also improve the bonding between the phases in such systems (see Chapter I of "Polymer-Polymer Miscibility", Academic Press, 1979). In practice this means that said agents suppress the tendency to delamination of two-phase polymer mixtures.

The agents for improving the compatibility mentioned sub B) can replace the polyphenylene ether in the polymer mixtures according to the invention entirely or partly.

The agents mentioned above sub A) to C) for improving the compatibility are known partly from the European Patent Applications mentioned hereinbefore and are described partly in Patent Applications of the Applicants not yet published.

Upon preparing the polymer mixtures according to the invention it has been found that the way of preparing and notably the sequence in which the various constituents are mixed together often is of great importance to obtain optimum properties. The correct sequence depends on the specifically used constituents.

It is generally preferred to use a method in which the polyphenylene ether is mixed first with the agent to improve the compatibility before the polyphenylene ether is mixed with the remaining constituents. However, this does not hold good in all cases.

Good results are also obtained by premixing the polyamide with the agent which is not particularly suitable to improve the impact strength of polyphenylene ether.

Mixing the individual constituents is preferably carried out by mixing in the melt, for example, in an extruder. The polymer mixtures according to the invention comprise at least one or more compounds selected from each of the groups of compounds mentioned hereinafter:
- polyphenylene ether
- polyamide
- agent to improve the compatibility
- agent to improve the impact strenght of polyphenylene ethers, also referred to as the first agent
- agent not particularly suitable to improve the impact strength of polyphenylene ether, also referred to as the second agent.

### Polyphenylene ethers

Polyphenylene ethers are compounds which are known per se. For this purpose reference may be made to the United States Patent Specifications 3,306,874; 3,306,875; 3,257,357 and 3,257,358. Polyphenylene ethers are usually prepared by an oxidative coupling reaction - in the presence of a copper amine complex - of one or more two-fold or three-fold substituted phenols; homopolymers and copolymers, respectively, being obtained. Copper amine complexes derived from primary, secondary and/or tertiary amines may be used. Examples of suitable polyphenylene ethers are:
poly(2,3-dimethyl-6-ethylphenylene-l,4-ether)
poly(2,3,6-trimethylphenylene-l,4-ether)
poly [2-(4'methylphenyl)phenylene-1,4-ether]
poly(2-bromo-6-phenylphenylene-1,4-ether)
poly(2-methyl-6-phenylphenylene-1,4-ether)
poly(2-phenylphenylene-1,4-ether)
poly(2-chlorophenylene-1,4-ether)
poly(2-methylphenylene-1,4-ether)
poly(2-chloro-6-ethylphenylene-1,4-ether)
poly(2-chloro-6-bromophenylene-1,4-ether)
poly(2,6-di-n-propylphenylene-1,4-ether)
poly(2-methyl-6-isopropylphenylene-1,4-ether)
poly(2-chloro-6-methylphenylene-1,4-ether)
poly(2-methyl-6-ethylphenylene-1,4-ether)
poly(2,6-dibromophenylene-1,4-ether)
poly(2,6-dichlorophenylene-1,4-ether)
poly(2,6-diethylphenylene-1,4-ether)
poly(2,6-dimethylphenylene-1,4-ether)

Copolymers, for example, copolymers derived from two or more phenols as used in the preparation of the above-mentioned homopolymers are also suitable. Furthermore suitable are graft copolymers and block copolymers of vinylaromatic compounds, for example, polystyrene, and of polyphenylene ether as described hereinbefore.

When an agent to improve the compatibility as indicated hereinbefore sub B is used, the polyphenylene ether may be replaced entirely or partly by said agent.

### Polyamides

Polyamides are used in the polymer mixtures according to the invention. In the method according to the invention polyamides are used as the constituent B. All thermoplastic polyamides known per se may be used in the polymer mixtures according to the invention.
Suitable polyamides are, for example, polyamide-4;
polyamide-6; polyamide-4,6; polyamide-6,6;
polyamide-3,4; polyamide-12; polyamide-11;
polyamide-6,10; polyamides prepared from terephthalic acid and 4,4'-diaminocyclohexyl methane, polyamides prepared from azelaic acid, adipic acid and
2,2-bis-(p-aminocyclohexyl)propane, polyamides prepared from adipic acid and metaxylylene diamine, polyamides from terephthalic acid and trimethyl hexamethylene diamine.

### Agent to improve the compatibility.

The polymer mixtures according to the invention must comprise one or more constituents to improve the compatibility. The use of an agent to improve the compatibility in polymer mixtures which comprise a polyphenylene ether and a polyamide is known per se in itself. The polymer mixtures according to the invention comprise one or more of the above-mentioned agents to improve the compatibility.

The agents mentioned above sub (A) to improve the compatibility are known from EP-A-0 024 120. All the agents mentioned therein are suitable for the polymer mixtures according to the invention. Notably, maleic acid anhydride, maleic acid, fumaric acid, maleimides, maleic acid amides and further reaction products of the compounds just mentioned with a (di)amine, are particularly suitable.

The agents mentioned above sub B) for improving the compatibility are disclosed in Applicants' Copending EP-A- 8590 4933.
The compounds mentioned therein can be obtained by reacting a polyphenylene ether with, for example, chloroethyanoyl succinic anhydride; trimellitic anhydride acid chloride; chloroformyl succinic anhydride; I-acetoxyacetyl-3,4-dibenzoic acid anhydride, the acid chloride of terephthalic acid. The compounds formed can be purified by precipitation in methanol or acetone. These agents may be used in combination with primary or secondary amines, for example, butyl amine, dibutyl amine, n.octadecyl amine.

The compounds mentioned above sub (C) are disclosed in EP-A 0 046 040 and EP-A 0 147 874. Examples of these compounds are styrene maleic acid anhydride copolymers, styrene-maleic acid anhydride methacrylate terpolymers, styrene-maleic acid anhydride acrylate terpolymers, and the rubber-modified variants of these compounds.

### Agent to improve the impact strength of polyphenylene ethers.

Agents to improve the impact strength of polyphenylene ethers are known per se. All agents known per se may be used in the polymer mixtures according to the invention. For this purpose reference may be made, for example, to US-A 4,113,800; 4,383,082; 3,994,856; 4,113,797; 4,191,685; 4,373,055; 4,234,701; 3,833,688; 4,478,979. More in particular may be mentioned by name vinylaromatic-polydiene di- or triblock copolymers, in which the block copolymer is not hydrogenated or is partly hydrogenated. Partially hydrogenated or non-hydrogenated linear styrene-butadiene-styrene triblock copolymers and radial styrene-butadiene block copolymers whether or not partially hydrogenated may be mentioned by name. Some types of polybutadiene and notably those types which are commercially available as a crumbly product, are also suitable.

### Agent which is not particularly suitable to improve the impact strength of polyphenylene ethers.

Agents to improve the impact strength are known per se. For this purpose reference may be made to the literature. In principle, any known agent to improve the impact strength is suitable. In particular an agent may be selected from one or more of the following groups of compounds:
- Ethylene-propylene copolymers or ethylene-propylene-non-conjugated diene terpolymers and all the remaining known compounds of this type, for example, as described in US-A 2,933,480; 3,000,866; 3,093,621; 3,379,701 and 3,407,158. These copolymers and terpolymers are usually referred to as EPM and EPDM.
- Ethylene-propylene copolymers or ethylene-propylene non-conjugated diene terpolymers on which a functional group has been grafted. Examples of functional groups are carboxylic acid groups or derivatives thereof. This type of agent to improve the impact is strength disclosed in US-A 3,884,882; 4,174,358; 4,251,644; 4,346,194 and 4,448,934. It is also possible to use epoxy groups as functional groups, for example, by grafting the copolymer or terpolymer with glycidyl methacrylate.
- Alkylene-alkyl(meth)acrylate copolymers with an alkylene group having 2-6 carbon atoms and with an alkyl group having 1-8 carbon atoms. These compounds are disclosed, for example, in US-A 3,700,751 and 3,845,163. This type of polymer is prepared by copolymerizing an olefin, for example, ethylene, propylene, with one or more of the following monomers: a C₁-C₈ alkyl acrylate, for example, methyl acrylate, ethyl acrylate, hexyl acrylate and the like; a C₁-C₈ alkyl methacrylate, for example, methyl methacrylate, ethyl methacrylate, hexyl methacrylate and the like; acrylic acid or methacrylic acid. To be preferred are the known copolymers of ethylene with an alkyl ester of acrylic acid. In general, the acrylate content or methacrylate content of the copolymer may be from approximately 10 to approximately 30% by weight. The olefin content of the copolymer may be from approximately 70 to approximately 90% by weight.

An example of the last-mentioned copolymers is an ethylene-ethyl acrylate copolymer with a weight ratio of ethylene to ethyl acrylate of approximately 4.5 to 1.
- Alkylene-alkyl(meth)acrylate polymers with a functional group, which functional group has been introduced, for example, by a polymerisation reaction while forming a terpolymer or by a grafting reaction. The functional group has been selected from carboxylic acid groups, acid anhydride groups, acid amide groups, imido groups, carboxylic acid ester groups, amino groups, hydroxyl groups or epoxy groups. The alkylene group of the alkylene alkyl(meth)acrylate comprises 2-6 carbon atoms and the alkyl group thereof comprises 1-8 carbon atoms. This type of agents to improve the impact strength is described, for example, in US-A-4,436,872; 4,478,978. Particularly suitable are ethylene-ethyl acrylate-maleic acid polymers and ethylene-ethylacrylate-fumaric acid polymers. This type of polymers can also be obtained by complete or partial saponification of the above-mentioned non-functionalized alkylene alkyl(meth)-acrylate copolymers. For this purpose reference may be made to US-A-4,485,214.
- Core-shell polymers having a rubber-like core and one or more shells. For this purpose, reference may be made, for example, to US-A-3,808,180; 4,096,202; 4,180,494; 4,306,040; 4,375,532 and 4,495,324. Core-shell polymers generally comprise a rubber-like core, for example, mainly constructed from a diene rubber, for example, polybutadiene rubber, or mainly from an acrylate rubber, for example, butylacrylate. The rubber of the core may moreover comprise one or more comonomers. The core may be cross-linked by carrying out the preparation of the core in the presence of cross-linking agents. As cross-linking agents may be used bifunctional compounds. One or more shells have been provided on the core, of which generally at least one is constructed from a stiff, i.e. non--rubber-like, polymer or copolymer. The shell or shells is or are generally built up from one or more of the following monomers: alkylmethacrylates, alkylacrylates, acrylonitrile, vinylaromatic compounds, for example, styrene or substituted styrene compounds, for example, alpha-methylstyrene or halogenated styrene compounds. The shell may be "bonded" to the shell via graft linking agents which may be present in the core. The preparation of core-shell polymer is generally known: for this purpose, reference may be made, for example, to the United States Patent Specifications mentioned hereinbefore.
- Core-shell polymers having a rubber-like core and one or more shells (core-shell polymer), the outermost shell of which comprises one or more functional groups selected from carboxylic acid groups, acid anhydride groups, acid amide groups, imido groups, carboxylic acid ester groups, amino groups, epoxy groups or hydroxyl groups. Such core-shell polymers are described, for example, in US-A-3,668,274; 4,034,013; 4,474,927. This type of core-shell polymers is generally prepared by incorporating in the (outermost) shell - by a polymerisation reaction - a monomer which comprises a double or threefold unsaturated bond and one or more of the above-mentioned functional groups. Examples of these core-shell polymers are polymers having a core of butylacrylate rubber and a shell of styrene or styrene acrylonitrile with 0.1-10% by weight of maleic acid anhydride.

Of course it is possible to use a combination of one or more of the above-mentioned agents to improve the impact strength.

The polymer mixtures according to the invention comprise the indicated constituents preferably in the following quantities, the said percentages being calculated by weight with respect to the sum of the quantities by weight of polyamide(s), polyphenylene ether(s) and impact-strength-improving agents: 5-93% of polyamide(s); 93-5% of polyphenylene ethers; 1-50% of agent to improve the impact strength of polyphenylene ethers and 1-50% of agent not particularly suitable to improve the impact strength of polyphenylene ethers. The non-functionalized alkylene-alkyl(meth)acrylate polymers are preferably used in a quantity of less than 12.5%.

In addition to the above-mentioned constituents, the polymer mixtures according to the invention may comprise one or more of the following constituents: styrene homo- or copolymers, high-impact polystyrene, dyes, pigments, reinforcing fillers, fillers, stabilizers and flame retarding agents. As stabilizers may be used the agents known generally for polyamides.

The polymer mixtures according to the invention may be prepared in various manners: by mixing solutions or slurries of the constituents, succeeded by evaporating or also by melt extrusion. Melt extrusion is generally preferred. In melt extrusion, the individual constituents are introduced, for example, into an extruder. In the extruder the constituents are heated, usually to a temperature above the melting temperature of the constituent(s) having the highest or one of the highest melting-point(s), for example, the polyphenylene ether, and intimately mixed. The extruder then produces the so-called extrudate, usually in the form of a strand, which is chopped up. The resulting pieces of the polymer mixtures according to the invention may further be processed according to techniques known per se for injection moulding of thermoplastic synthetic resins.

In preparing the polymer mixtures according to the invention in an extruder it has been found that the sequence in which the various constituents are mixed is of importance. For example, polymer mixtures having better properties are often obtained when the polyphenylene ether or a part of the quantity of polyphenylene ether to be used is pre-mixed in an extruder in a separate step with the agent to improve the compatibility. The resulting pre-extrudate is then mixed with the remaining constituents in an extruder.

It is also possible first to prepare a pre-mixture of the polyamide or a part of the quantity of polyamide to be used and the agent not particularly suitable to improve the impact strength of polyphenylene ethers. The resulting pre-mixture is then mixed with the remaining constituents.

In some cases, polymer mixtures having better properties were obtained when first the polyamide or a. part of the quantity of polyamide to be used, is mixed in the melt with the agent not particularly suitable to improve the impact strength of polyphenylene ethers, the polyphenylene ether or a part of the quantity of polyphenylene ether to be used is then mixed with the agent to improve the the impact strength of polyphenylene ethers and with the agent to improve the compatibility in the melt, after which the two resulting pre-mixtures and the constituents possibly not yet incorporated in the pre-mixtures are mixed in the melt.

The invention also relates to products obtained from the polymer mixtures according to the invention.

The invention will now be described with reference to the ensuing specific examples.

### Example I and comparative example A.

A polymer mixture was prepared from 49 parts by weight of a polyphenylene ether (poly(2,6-dimethylphenylene-1,4-ether) with an intrinsic viscosity of approximately 49 ml/g measured at 25° C in chloroform, 41 parts by weight of a polyamide-6,6 having a nummer-averaged molecular weight Mn of 20,000 and a viscosity index of 135 ml/g, measured according to ISO R 307 (0.5 g of polyamide dissolved in 100 g of 90% formic acid at 25° C), and a moisture content after drying of less than 0.2% by weight, 10 parts by weight of a non-hydrogenated styrene-butadiene-styrene block copolymer, 0.7 parts by weight of citric acid-I-hydrate and 0.4 parts by weight of stabilizers (comparative example A).

Moreover a mixture was prepared starting from the constituents mentioned hereinbefore while using the same quantities, in which in addition 2 parts by weight of an ethylene-ethylacrylate copolymer with 18% ethylacrylate was used (Example I according to the invention).

The two above-mentioned polymer mixtures were thoroughly mixed and extruded in a Werner-Pfleiderer extruder at an average temperature of 285° C and at 300 rpm. All the constituents, except 31 parts by weight of the polyamide-6,6, were collectively supplied to the end of the extruder; the said 31 parts by weight of polyamide-6,6 were supplied via a special filling opening approximately halfway the extruder. The resulting extrudate was chopped up.

Test rods were manufactured from the resulting polymer mixtures by injection moulding according to ASTM D 638 for the determination of the tensile stress upon fracture and the elongation upon fracture. Test rods according to ASTM D 256 were also moulded for the measurement of the impact strength according to Izod (with notch). Moreover, a falling dart impact was measured at disks having a thickness of 3.2 mm and a diameter of 100 mm. In this test a standardized test body having a hemispherical tip and a weight of 100 N is dropped on the disk from a height of 2.2 m, the disk being laid on an annular support having a diameter of 95 mm. The absorbed energy to fracture was measured. The energy value thus found is indicated as "falling dart impact" (DIN 53443).

The values found, as well as the composition of the polymer mixtures according to the Examples I and A, are recorded in Table 1 below.

It may be seen from the results of Table 1 that the addition of a comparatively small quantity of ethylene-ethyl-acrylate leads to a great improvement of the Izod impact strength.

**Table 1**

| Example | A | I |
|---|---|---|
| Composition (parts by weight) | | |
| Polyamide-6,6 | 41 | 41 |
| Polyphenylene ether | 49 | 49 |
| Styrene-butadiene--styrene block copolymer | 10 | 10 |
| Ethylene-ethylacrylate copolymer | - | 2 |
| Citric acid-1-hydrate | 0.7 | 0.7 |
| Stabilizers | 0.4 | 0.4 |
| Properties | | |
| Tensile stress upon flow (MPa) | 66.8 | 57.6 |
| Elongation upon fracture (%) | 56 | 48 |
| Izod impact strength (J/m) | 248 | 325 |
| Falling dart impact (J) | 205 | 220 |

### Examples II to V and comparative examples B, C, D, E and F.

Various core-shell polymers were prepared by polymerization of butylacrylate (PBA) for the core and of methyl methacrylate (PMMA) or methyl methacrylate/styrene mixtures, with in a few cases maleic acid anhydride (MAA) for the shell. These core-shell polymers (Nos 1-4) were prepared as follows:

### The preparation of PBA core

### 1.1 The following solutions were prepared:

| | | |
|---|---|---|
| A. | 501.8 | parts by weight of n-butylacrylate |
| | 2.6 | parts by weight of allylmethacrylate |
| | 7.7 | parts by weight of tris(2-acrylyloxy-ethyl) isocyanurate |
| B. | 12.8 | parts by weight of sodium (n-dodecyl benzene sulphonate) |
| | 512 | parts by weight of demineralized water |
| C. | 2.56 | parts by weight of K₂S₂O₈ (potassium peroxydisulphate) |
| | 128 | parts by weight of demineralized water |
| D. | 2.56 | parts by weight of Na₂S₂O₅ (sodium disulphite) |
| | 128 | parts by weight of demineralized water. |

A glass 2-litre-reactor was filled with B and a quarter of solution A, cooled to 10° C and made oxygen-free by rinsing/evacuating with nitrogen five times. The mixture of A and B was emulsified by stirring. The temperature was then raised to 40° C. 60 Parts by weight of (deaerated) solution C were injected, succeeded by 60 parts by weight of (deaerated) solution D. The polymerisation reaction set in immediately, which resulted in a rise in temperature to 70-75° C in 10 minutes: the temperature was then adjusted at 60° C and the pressure at 1.5 atmospheres. The remainders of solutions C and D (deaerated) were gradually added in a period of 2 hours by means of dosing pumps. Stirring was then continued for another hour at 60° C to complete the reaction.

### Preparation of the core-shell polymer

### 1.2 The following solutions were prepared and deaerated:

| | | |
|---|---|---|
| E. | 125.4-a | parts by weight of methylmethacrylate |
| | a | parts by weight of styrene |
| | 0.64 | parts by weight of allylmethacrylate |
| | 2.56 | parts by weight of maleic acid anhydride |
| | 1.9 | parts by weight of tris(2-acrylyloxy-ethyl) isocyanurate |
| F. | 0.64 | parts by weight of K₂S₂O₈ (potassium peroxydisulphate) |
| | 160 | parts by weight of demineralized water |
| G. | 0.64 | parts by weight of Na₂S₂O₅ (sodium disulphite) |
| | 32 | parts by weight of demineralized water |

The solutions E, F and G were added gradually to the reaction mixture obtained sub 1.1 over a period of thirty minutes, while stirring.

### Isolation

### 1.3 The resulting latex was destabilized by pouring the contents of the reactor through a filter into a rapidly stirred aqueous solution with 1% by weight of CaCl₂. The precipitated polymer was isolated by filtration, washed with water and dried in a vacuum at 60° C.

The following core-shell polymers were prepared (variable a = content of styrene)

**Table 2**

| a parts by weight | swelling index (g/g) | gel fraction (wt.%) | core-shell polymer No. |
|---|---|---|---|
| 0 | 4.9 | 99.0 | 1 * |
| 0 | 4.6 | 99.0 | 2 |
| 62.7 | 6.0 | 87.3 | 3 |
| 118.0 | 5.6 | 95.4 | 4 |

| | | | |
|---|---|---|---|
| * comprises no maleic acid anhydride. | | | |

The above-mentioned core-shell polymers were premixed in an extruder with the same polyamide-6,6 and the same stabilizers as used in Example I. The extruder was adjusted at a temperature of on an average 275° C and a speed of 300 rpm. In this manner, five different pre-mixtures were prepared having a composition as indicated in Table 3.

**Table 3**

| Pre-mixtures No. | P0 | P1 | P2 | P3 | P4 |
|---|---|---|---|---|---|
| Composition (parts by weight) | | | | | |
| Polyamide-6,6 | 100 | 80 | 80 | 80 | 80 |
| Core-shell polymer No. 1 | - | 20 | - | - | - |
| 2 | - | - | 20 | - | - |
| 3 | - | - | - | 20 | - |
| 4 | - | - | - | - | 20 |
| Stabilizers | 0.4 | 0.4 | 0.4 | 0.4 | 0.4 |

Various polymer mixtures B to F and II to IV were prepared while using the pre-mixtures P0, P1, P2, P3, P4, polyphenylene ether thus obtained (as used in Example I), a partially hydrogenated styrene-butadiene-styrene triblock copolymer, maleic acid anhydride, polyamide-6,6 (as used in Example I) and stabilizers (as used in Example I). All polymer mixtures were extruded in a Werner-Pfleiderer extruder adjusted at an average temperature of approximately 285° C, speed 300 rpm. The constituents were fed into the extruder in two different places; one part of the constituents at the end of the extruder and one part via a special filling machine approximately halfway the extruder. All this is recorded in Table 4 hereinafter. Furthermore, the properties of the resulting polymer mixtures are recorded in Table 4.

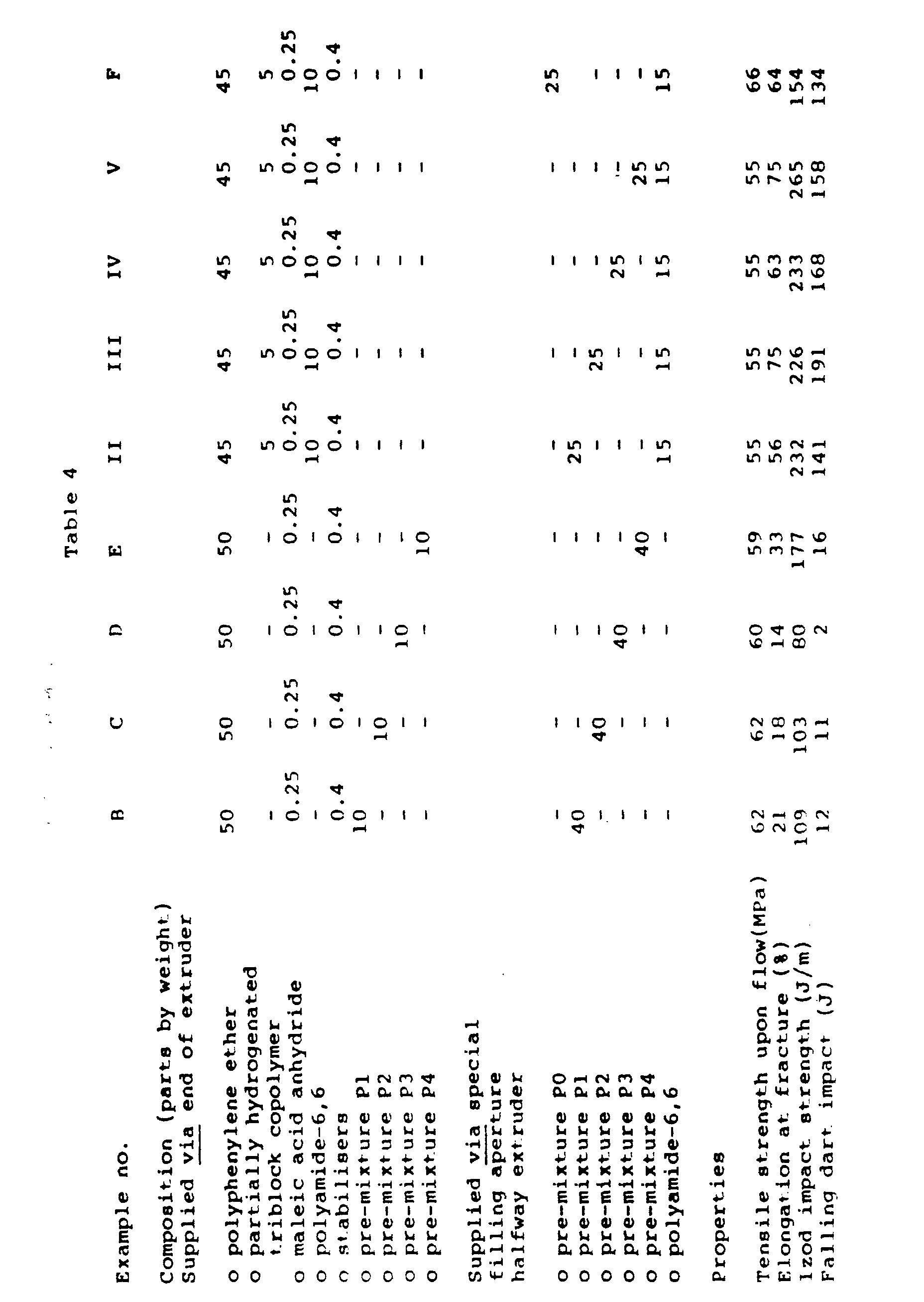

As may be seen in Table 4, the polymer mixtures according to the invention have a better Izod impact strength and a better falling dart impact value than the comparative examples B to F.

### Examples VI to XVI, comparative examples G and H.

In these examples various agents not particularly suitable to improve the impact strength of polyphenylene ether were used. It concerns the following agents:

| Second agent to improve the impact strength No. | Chemical nature |
|---|---|
| 5 | Terpolymer of ethylene (66%)-butyl acrylate maleic acid anhydride; |
| 6* | PBA core (72.5%); shell (27.5%): PS-MZA copolymer with 3.5% MZA calculated with respect to PS + MZA; |
| 7* | PBA core (72.5%7); shell (27.5%): PS-AN-MAA with 6.0% MAA calculated with respect to PS + AN + MAA; |
| 8* | PBA core (72.5%); shell (27.5%): PS-AN-MAA with 3.5% MAA calculated with respect to PS + AN + MAA; |
| 9 | ethylene-ethylacrylate (18% ethylacrylate); |
| 10 | polybutadiene core (67.5%); PMMA-PS shell (32.5%); |
| 11 | EPDM with 1.5% MAA |
| 12 | EPDM with 0.6% MAA; |
| PBA = polybutylacrylate; PS = polystyrene; MAA = maleic acid anhydride; AN = acrylonitrile; PMMA = polymethylmethacrylate; EPDM = ethylene-propylene-non- | |
| conjugated diene monomer polymer. | |
| * prepared as indicated in Examples II to V while using the constituents mentioned. | |

The agents (Nos 5 to 12) mentioned above were premixed in an extruder (extrusion temperature on an average 275° C) with the same type of polyamide-6,6 and with the same stabilizers as used in Example I. In this manner the pre-mixtures P5 to P14 were obtained. The composition of these pre-mixtures was as follows:

| Composition (parts by weight) | | | | |
|---|---|---|---|---|
| Pre-Mixture | Second agent to improve the impact strength | | Polyamide-6,6 | Stabilizers |
| | Type | Quantity | Quantity | Quantity |
| P5 | No. 5 | 10 | 90 | 0.4 |
| P6 | No. 6 | 10 | 90 | 0.4 |
| P7 | No. 7 | 10 | 90 | 0.4 |
| P8 | No. 8 | 10 | 90 | 0.4 |
| P9 | No. 9 | 10 | 90 | 0.4 |
| P10 | No. 10 | 10 | 90 | 0.4 |
| P11 | No. 11 | 10 | 90 | 0.4 |
| P12 | No. 12 | 10 | 90 | 0.4 |
| P13 | No. 9 | 25 | 75 | 0.4 |
| P14 | No. 10 | 25 | 75 | 0.4 |

A pre-mixture P15 was prepared from 90 parts by weight of polyphenylene ether, 10 parts by weight of a partially hydrogenated styrene-butadiene-styrene block copolymer and 0.50 parts by weight of maleic acid anhydride. The said constituents were for that purpose mixed in an extruder at an average temperature of 305°C, speed 300 rpm.

In the Examples VI to XVI, always 50.25 parts by weight of pre-mixture P15, 50.2 parts by weight of one of the pre-mixtures P5 to P14, and 0.4 parts by weight of stabilizers were mixed and extruded in an extruder (average adjusted temperature 285° C), several polymer mixtures according to the invention being obtained.

The composition of the resulting final products and the properties thereof are summarized in Tables 5 and 6.

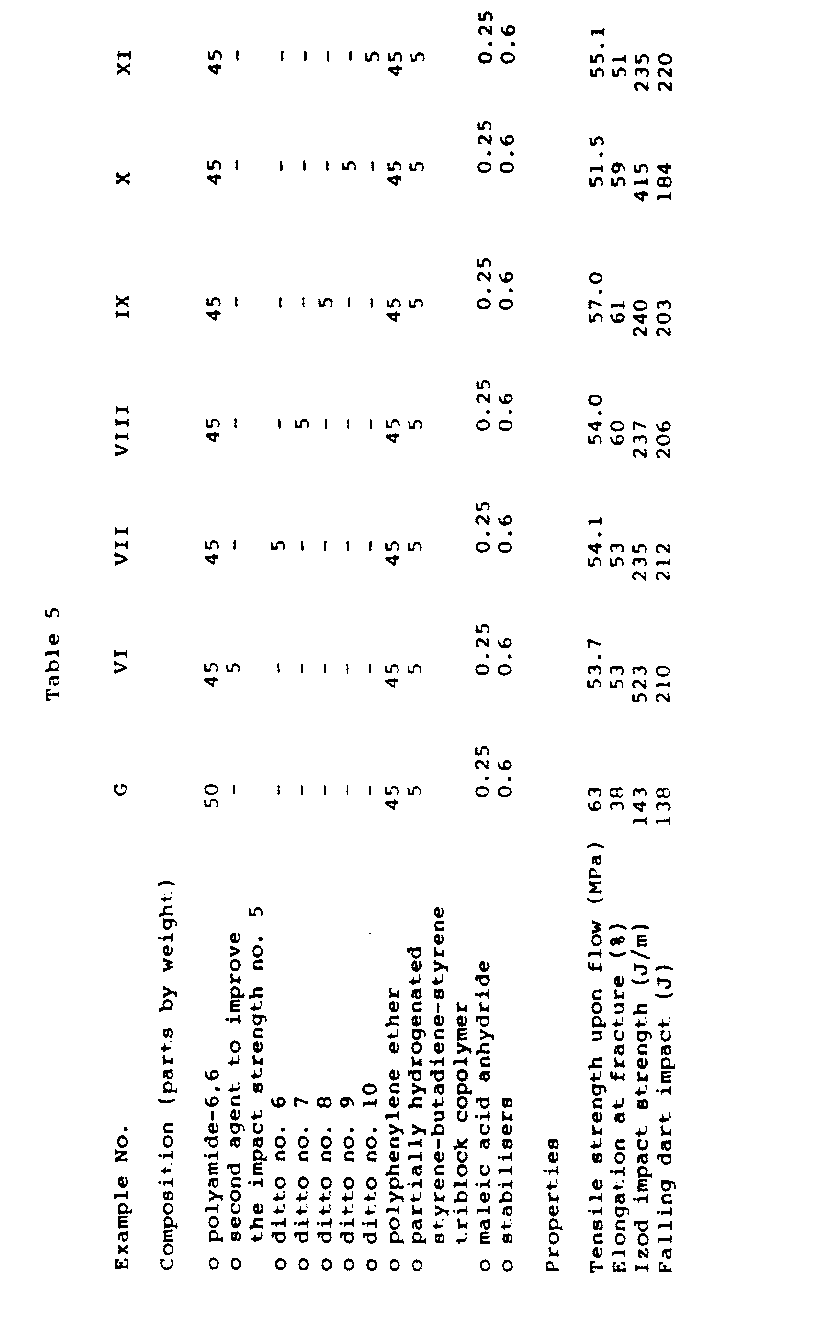

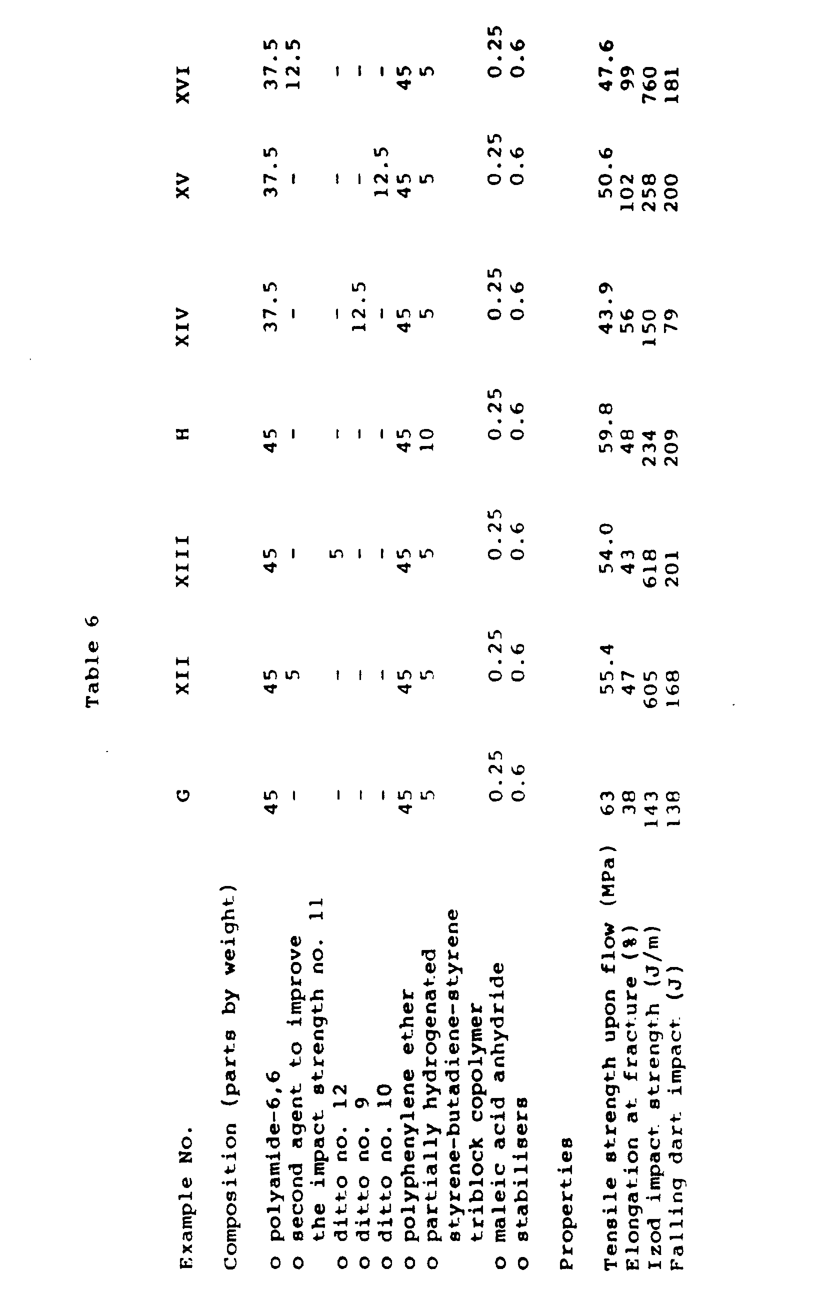

It may be seen from Tables 5 and 6 that the examples according to the invention have a better impact strength than the comparative examples G and H which comprise only an agent to improve impact strength.

From a comparison of Example X with Example XIV it appears that in polymer mixtures according to the invention a content of non-functionalized ethylene-ethylene acrylate copolymer (second agent No. 9) of 12.5% gives less good results than a content of 5%.

## Claims

1. A polymer mixture comprising 5-93% of polyamide(s), 93-5% polyphenylene ether(s), 1-50% of an agent to improve the impact strength of polyphenylene ether(s) and 1-50% of an agent not particularly suitable to improve the impact strength of polyphenylene ether(s), but suitable to improve the impact strength of polyamide(s), the percentages being calculated by weight with respect to the sum of the quantities by weight of polyamide(s), polyphenylene ether(s), and impact strength improving agents: and comprising as an agent to improve the compatibility between the polyamide(s) and the polyphenylene ether(s) one or more of the following:
A) compounds having in their molecular structure a two-fold or three-fold carbon-to-carbon bond and a carboxylic acid, acid anhydride, acid amide, imido, carboxylic acid ester, amino or hydroxyl group, in a quantity of from 0.01 to 30 parts by weight per 100 parts by weight of polyamide plus polyphenylene ether,
B) a functionalised polyphenylene ether consisting of the reaction product of (a) a polyphenylene ether and (b) a compound of the general formula (i)-Z-(ii), wherein (i) is at least a group of the formula [X-C(O)] with x = F, Cl, Br, I, OH, -OR, or - O-C(O)-R with R = H, alkyl or aryl, wherein (ii) is at least a carboxylic acid, acid anhydride, acid amide, imido, carboxylic acid ester, amino or hydroxyl group, and in which the groups (i) and (ii) are covalently bonded together via a bridge Z, Z being a bivalent hydrocarbon radical.
C) a copolymer with units of a vinylaromatic compound and of an alpha-beta unsaturated dicarboxylic acid or dicarboxylic acid anhydride or a copolymer with units of a vinylaromatic compound and of an imide compound of an alpha-beta unsaturated dicarboxylic acid, in a quantity of from 0.5 to 100 parts by weight per 100 parts by weight of polyamide plus polyphenylene ether.

2. A polymer mixture as claimed in Claim 1, **characterized in that** the polymer mixture comprises as an agent not particularly suitable to improve the impact strength of polyphenylene ether, an ethylene propylene copolymer or an ethylene-propylene-non-conjugated diene terpolymer.

3. A polymer mixture as claimed in Claim 1, **characterized in that** the polymer mixture comprises as an agent not particularly suitable to improve the impact strength of polyphenylene ethers, an ethylene-propylene copolymer or an ethylene-propylene-non-conjugated diene terpolymer, on which a vinylmonomer having a carboxylic acid group or a derivative thereof or on which vinylmonomer having an epoxy group has been grafted.

4. A polymer mixture as claimed in Claim 1, **characterized in that** the polymer mixture comprises as an agent not particularly suitable to improve the impact strength of polyphenylene ethers, an alkylene-alkyl-(meth)-acrylate copolymer having an alkylene group with 2-6 carbon atoms and having an alkyl group with 1-8 carbon atoms.

5. A polymer mixture as claimed in Claim 4, **characterized in that** the polymer mixture comprises as an agent not particularly suitable to improve the impact strength of polyphenylene ethers, an alkylene-alkyl(meth)acrylate having a functional group, which functional group has been introduced either by a polymerisation reaction while forming a terpolymer or by a grafting reaction, the functional group being selected from carboxylic acid groups, acid anhydride groups, acid amide groups, imido groups, carboxylic acid ester groups, amino groups, hydroxyl groups or epoxy groups and in which the alkylene group of the alkylenealkyl(meth)acrylate comprises 2-6 carbon atoms and the alkyl group thereof comprises 1-8 carbon atoms.

6. A polymer mixture as claimed in Claim 1, **characterized in that** the polymer mixture comprises as an agent not particularly suitable to improve the impact strength of polyphenylene ethers, a core-shell polymer having a rubber-like core and one or more shells (core-shell copolymer).

7. A polymer mixture as claimed in Claim 6, **characterized in that** the polymer mixture comprises as an agent to improve the impact strength a core-shell polymer the outermost shell of which comprises one or more functional groups selected from carboxylic acid groups, acid anhydride groups, acid amide groups, imido groups, carboxylic acid ester groups, amino groups, epoxy groups or hydroxyl groups.

8. A polymer mixture as claimed in Claim 1, **characterized in that** the polymer mixture comprises as an agent to improve the impact strength of polyphenylene ethers a vinylaromatic polydiene di- or triblock copolymer, the block copolymer being non-hydrogenated or partially hydrogenated or comprising a polybutadiene.

9. A polymer mixture as claimed in Claim 1, **characterized in that** the polyphenylene ether has been replaced entirely or partly by an agent as indicated in Claim 1 sub B.

10. A polymer mixture as claimed in Claim 1, **characterized in that** the polymer mixture comprises a polyamide-6,6 as a polyamide.

11. A polymer mixture a claimed in Claim 1, **characterized in that** the polymer mixture comprises poly(2.6-dimethyl phenylene-1,4-ether) as a polyphenylene ether.

12. A polymer mixture as claimed in Claim 1, **characterized in that** in addition to the already mentioned constituents the polymer mixture comprises one or more of the following constituents: polystyrene homo- or copolymers, high-impact polystyrene, dyes, pigments, reinforcing fillers, fillers, stabilizers, flame-retarding agents.

13. A method of preparing a polymer mixture as claimed in one or more of the preceding Claims, in which the various constituents are mixed together in the melt in more than one step, **characterized in that** the polyphenylene ether or a part of the quantity of polyphenylene ether to be used is first pre-mixed with the agent to improve the compatibility and optionally the agent to improve the impact strength of polyphenylene ether, after which the formed premixture is mixed with the remaining constituents.

14. A method of preparing a polymer mixture as claimed in one or more of the preceding Claims, **characterized in that** the polyamide or a part of the quantity of polyamide to be used is first pre-mixed in the melt with the agent not particularly suitable to improve the impact strength of polyphenylene ethers, after which the resulting pre-mixture is mixed together in the melt with the remaining constituents.

15. A method as claimed in Claims 13-14 **characterized in that** the polyamide or a part of the quantity of polyamide to be used is first mixed in the melt with an agent nor particularly suitable to improve the impact strength of polyphenylene ethers, the polyphenylene ether or a part of the quantity of polyphenylene ether to be used is mixed in the melt with the agent to improve the impact strength of polyphenylene ethers and with the agent to improve the compatibility, after which the two resulting premixtures and the constituents possibly not yet incorporated in the pre-mixtures, are mixed together in the melt.

16. Articles formed from a polymer mixture as claimed in Claims 1-12 or from a polymer mixture obtained by using the method as claimed in Claims 13-15.

## Patentansprüche

1. Polymermischung enthaltend 5-93% Polyamide, 93-5% Polyphenylenäther, 1-50% eines Mittels zur Verbesserung der Schlaglestigkeit von Polyphenylenäther(n) und 1-50% eines Mittels, welches nicht besonders geelgnet ist, die Schlagfestigkeit von Polyphenylenäther(n) zu verbessern, indessen geeignet ist die Schlagfestigkeit von Polyamid(en) zu verbessem, wobei die Prozentsätze auf das Gewicht mit bezug auf die Summe der Gewichtsmengen von Polyamid(en), Polyphenylenäther(n) und den die Schlagfestigkeit verbessernden Mitteln berechnet sind und als Mittel zur Verbesserung der Verträglichkelt zwischen dem Polyamid (den Polyamiden) und dem Polyphenylenäther (den Polyphenylenäthem) ein oder mehrere der folgenden Stoffe enthalten:
a) Verbindungen, die in ihrer Molekurlarstruktur eine zweifache oder dreifache Kohlenstoff- Kohlenstoffbindung und eine Carbonsäure-, Säureanhydrid-, Säureamid-, Imido-, Carbonsäureester-, Amino- oder Hydroxylgruppe in einer Menge von 0,01-30 Gewichtsteilen pro 100 Gewichtsteile des Polyamids plus Polyphenylenäthers enthalten,
b) einen funktionalisierten Polyphenylenäther bestehend aus dem Reaktionsprodukt aus (a) einem Polyphenylenäther und (b) einer Verbindung der allgemeinen Formel (i) -Z-(ii), worin (I) wenigstens eine Gruppe der Formel X-C(O) - mit X=F, Cl, Br, I, OH, -OR, oder -O-C(O)-R wobei R=H, Alkyl oder Aryl ist, worin (ii) wenigstens eine Carbonsäure-, Säureanhydrid-, Säureamid-, Imido-, Carbonsäureester-, Amino- oder Hydroxylgruppe Ist und worin die Gruppen (i) und (ii) kovalent miteinander über eine Brücke Z verbunden sind, wobei Z ein zweiwertiger Kohlenwasserstoffrest ist.
c) sin Copolymer mit Einheiten einer vinylaromatischen Verbindung und einer alpha-beta ungesättigten Dicarbonsäuren oder Dicarbonsäureanhydrid oder einem Copolymeren mit Einheiten aus einer vinylaromatischen Verbindung und einer Imidverbindung einer alpha-beta ungesättigten Dlcarbonsäure in einer Menge von 0,5 - 100 Gewichtsteilen pro 100 Gew.-Teile des Polyamids plus Polyphenylenäthers.

2. Polymermischung nach Anspruch 1, **dadurch gekennzeichnet, daß** die Polymermischung als ein Mittel, welches nicht besonders geeignet ist, die Schlagfestigkeit von Polyphenylenäther zu verbessem, ein Äthylenpropylencopolymer oder ein Äthylen-propylen-nicht konjugiertes Dienterpolymer enthält.

3. Polymermischung nach Anspruch 1, **dadurch gekennzeichnet, daß** die Polymermischung als ein Mittel, welches nicht besonders geeignet ist, die Schlagfestigkeit von Polyphenylenäther zu verbessem, ein Äthylenpropylencopolymer oder ein Äthylen-propylen-nicht konjugiertes Dienterpolymer enthält, auf welches ein Vinylmonomer mit einer Carbonsäuregruppe oder einem Derivat derselben oder auf welches ein Vinylmonomer mit einer Epoxygruppe aufgepfropft worden ist

4. Polymermischung nach Anspruch 1, **dadurch gekennzeichnet, daß** die Polymermischung als Mittel. welches nicht besonders geeignet ist, die Schlagfestigkeit von Polyphenylenäthern zu verbessern. ein Alkylen-alkyl-(meth)-acrylat-copolymer enthält, welches eine Alkylengruppe mit 2 bis 6 Kohlenstoffatomen aufweist und ein Alkylgruppe mit 1 bis 8 Kohlenstoffatomen besitzt.

5. Polymermischung nach Anspruch 4. **dadurch gekennzeichnet, daß** die Polymermlschung als ein Mittel, welches nicht besonders geeignet ist, die Schlagfestigkeit von Polyphenylenäthern zu verbessern, ein Alkylen-alkyl-(meth)-acrylat mit einer funktionellen Gruppe enthält, welche funktionelle Gruppe entweder durch eine Polymerisationsreaktion bei der Bildung eines Terpolymeren oder durch eine Pfropfreaktion eingeführt worden ist, wobei die funktionelle Gruppe ausgewählt Ist aus Carbonsäuregruppen, Säureanhydridgruppen, Säureamidgruppen, Imidogruppen, Carbonsäureestergruppen, Aminogruppen, Hydroxylgruppen oder Epoxygruppen und in welchen die Alkylengruppen das Alkylenalkyl(meth)-acrylats 2 bis 6 Kohlenstoffatome aufweist und die Alkylgruppe derselben 1 bis 8 Kohlenstoffatome besitzt.

6. Polymermischung nach Anspruch 1, **dadurch gekennzeichnet, daß** die Polymermischung als ein Mittel, welches nicht besonders geeignet ist die Schlagfestigkeit von Polyphenylenäthern zu verbessern, ein Kern-Mantelpolymer mit einem gummiartigen Kem und einem oder mehreren Mänteln (Kemmantelcopolymer) enthält

7. Polymermischung nach Anspruch 6, **dadurch gekennzeichnet, daß** die Polymermischung als Mittel zur Verbesserung der Schlagfestigkeit ein Kern-Mantelpolymer enthält, bei dem der äußerste Mantel eine oder mehrere funktionelle Gruppen aufweist, die ausgewählt sind aus Garbonsäuregruppen, Säureanhydridgruppen, Säureamidgruppen, Imidgruppen, Carbonsäureestergruppen, Aminogruppen, Epoxygruppen oder Hydroxylgruppen.

8. Polymermischung nach Anspruch 1, **dadurch gekennzeichnet, daß** die Polymermischung als Mittel zur Verbesserung der Schlagfestigkeit der Polyphenylenäther ein vinylaromatisches Polydien di-oder triblock-copolymer bei dem das Blockcopolymer nicht hydriert oder teilweise hydriert Ist oder ein Polybutadien enthält.

9. Polymermischung nach Anspruch 1, **dadurch gekennzeichnet, daß** der Polyphenylenäther vollständig oder teilwelse durch ein Mittel ersetzt ist wie es in Anspruch 1 unter B angegeben ist.

10. Polymermischung nach Anspruch 1, **dadurch gekennzeichnet, daß** die Polymermischung ein Polyamid-6,6 als ein Polyamid enthält.

11. Polymermischung nach Anspruch 1, **dadurch gekennzeichnet, daß** die Polymermischung Poly (2,6-dimethylphenylen-1,4-äther) als Polyphenylenäther enthält.

12. Polymermischung nach Anspruch 1, **dadurch gekennzeichnet, daß** zusätzlich zu den bereits genannten Bestandteilen die Polymermischung ein oder mehrere der folgenden Bestandteile enthält:
Polystyrol Homo-oder Copolymere, hochschlagfeste Polystyrole, Farbstoffe, Pigmente, verstärkende Füllstoffe, Füllstoffe, Stabilisatoren, flammhemmende Mittel.

13. Verfahren zur Herstellung einer Polymermischung wie sie in einem oder mehreren der vorausgehenden Ansprüche beansprucht wird, bei dem die verschiedenen Bestandteile in der Schmelze in mehr als einer Stufe zusammengemlscht werden, **dadurch gekennzeichnet, daß** der Polyphenylenäther oder ein Teil der verwendeten Menge des Polyphenylenäthers zuerst mit dem Mittel zur Verbesserung der Verträglichkeit und fakultativ dem Mittel zur Verbesserung der Schlagfestigkeit des Polyphenylenäthers vorgemischt wird, worauf die gebildete Vormischung mit den restlichen Bestandteilen zusammengemischt wird.

14. Verfahren zur Herstellung einer Polymermischung nach einem oder mehreren der vorausgehenden Ansprüche, dadurch gakennzeichnet, daß das Polyamid oder ein Teil der Menge des verwendeten Polyamids zuerst in der Schmelze mit dem Mittel, welches nicht besonders geeignet ist, die Schlagfestigkeit der Polyphenylenäther zu verbessem, vorgemischt wird, worauf die erhaltene Vormischung in der Schmelze mit den restlichen Bestandteilen zusammengemischt wird.

15. Verfahren nach den Ansprüchen 13 bis 14, dadurch gekennzeichet, daß das Polyamid oder ein Teil der verwendeten Menge des Polyamids zuerst in der Schmelze mit dem Mittel, welches nicht besonders geeignet ist. die Schlagfestigkeit der Polyphenylenäther zu verbessem, zusammengemischt wird, der Polyphenylenäther oder ein Teil der verwendeten Menge des Polyphenylenäthers in der Schmelze mit dem Mittel zur Verbesserung der Schlagfestigkeit des Polyphenylenäthers und mit dem Mittel zur Verbesserung der Verträglichkeit zusammengemischt wind, worauf die beiden erhaltenen Vormischungen und die möglichen noch nicht zugemischten Bestandteile in die Vormischungen inkorporiert werden und in der Schmelze zusammengemischt werden.

16. Gegenstände, die aus einer Polymermischung wie sie in den Ansprüchen 1 bis 12 beansprucht oder aus einer Polymermischung wie sie durch Verwendung des Verfahrens nach den Ansprüchen 13 bis 15 erhalten wird. ausgeformt sind.

## Revendications

1. Mélange de polymères comprenant de 5 à 93 % d'un ou de plusieurs polyamides, de 93 à 5 % d'un ou de plusieurs poly(éther de phénylène), de 1 à 50 % d'un agent améliorant la résistance au choc du poly(éther de phénylène), et de 1 à 50 % d'un agent qui n'est pas particulièrement approprié pour améliorer la résistance au choc du ou des poly(éther de phénylène), mais qui est approprié pour améliorer la résistance au choc du ou des polyamides, les pourcentages étant calculés en poids par rapport à la somme des poids du ou des polyamides, du ou des poly(éther de phénylène) et des agents améliorant la résistance au choc, et comprenant, comme agent pour améliorer la compatibilité entre le ou les polyamides et le ou les poly(éther de phénylène) un ou plusieurs des composés suivants :
A) les composés ayant, dans leur structure moléculaire, une double liaison ou une triple liaison carbone-carbone et un groupe acide carboxylique, anhydride d'acide, amide, imido, ester d'acide carboxylique, amino ou hydroxyle, en une quantité de 0,01 à 30 parties en poids pour 100 parties en poids de la somme de polyamide et de poly(éther de phénylène),
B) un poly(éther de phénylène) fonctionnalisé constitué du produit de la réaction entre
(a) un poly(éther de phénylène) et
(b) un composé de formule générale
(i) -Z-(ii),
dans laquelle
(i) est au moins un groupe de formule [X-C(O)], dans laquelle X est F, Cl, Br, I, OH, -OR ou -O-C(O)-R, où R est un atome d'hydrogène ou un groupe alkyle ou aryle, et
(ii) est au moins un groupe acide carboxylique, anhydride d'acide, amide, imido, ester d'acide carboxylique, amino ou hydroxyle, et les groupes (i) et (ii) sont liés par covalence via un pont Z, Z étant un radical hydrocarboné divalent,
C) un copolymère ayant des motifs dérivés d'un composé vinylaromatique et d'un acide dicarboxylique ou anhydride d'acide dicarboxylique α,β-insaturé ou un copolymère avec des motifs dérivés d'un composé vinylaromatique et d'un imide d'un acide dicarboxylique α,β-insaturé, en une quantité de 0,5 à 100 parties en poids pour 100 parties en poids de la somme de polyamide et de poly(éther de phénylène).

2. Mélange de polymères selon la revendication 1, **caractérisé par le fait qu'**il comprend, comme agent qui n'est pas particulièrement approprié pour améliorer la résistance au choc des poly(éther de phénylène), un copolymère d'éthylène-propylène ou un terpolymère d'éthylène-propylène-diène non conjugué.

3. Mélange de polymères selon la revendication 1, **caractérisé par le fait qu'**il comprend, comme agent qui n'est pas particulièrement approprié pour améliorer la résistance au choc des poly(éther de phénylène), un copolymère d'éthylène-propylène ou un terpolymère d'éthylène-propylène-diène non conjugué sur lequel un monomère vinylique ayant un groupe acide carboxylique ou un dérivé de celui-ci ou sur lequel un monomère vinylique ayant un groupe époxy a été greffé.

4. Mélange de polymères selon la revendication 1, **caractérisé par le fait qu'**il comprend, comme agent qui n'est pas particulièrement approprié pour améliorer la résistance au choc des poly(éther de phénylène), un copolymère d'alkylène-(méth)acrylate d'alkyle ayant un groupe alkylène de 2 à 6 atomes de carbone et un groupe alkyle de 1 à 8 atomes de carbone.

5. Mélange de polymères selon la revendication 4, **caractérisé par le fait qu'**il comprend, comme agent qui n'est pas particulièrement approprié pour améliorer la résistance au choc des poly(éther de phénylène), un copolymère alkylène-(méth)acrylate d'alkyle ayant un groupe fonctionnel qui a été introduit soit par une réaction de polymérisation avec formation d'un terpolymère, soit par une réaction de greffage, le groupe fonctionnel étant choisi parmi les groupes acide carboxylique, anhydride d'acide, amide, imido, ester d'acide carboxylique, amino, hydroxyle ou époxy, et le groupe alkylène du copolymère alkylène-(méth)acrylate d'alkyle comprend de 2 à 6 atomes de carbone et son groupe alkyle comprend de 1 à 8 atomes de carbone.

6. Mélange de polymères selon la revendication 1, **caractérisé par le fait qu'**il comprend, comme agent qui n'est pas particulièrement approprié pour améliorer la résistance au choc des poly(éther de phénylène), un polymère centre-enveloppe ayant un centre caoutchouteux et une ou plusieurs enveloppes (copolymère centre enveloppe).

7. Mélange de polymères selon la revendication 6, **caractérisé par le fait qu'**il comprend, comme agent pour améliorer la résistance au choc, un polymère centre-enveloppe dont l'enveloppe la plus externe comprend un ou plusieurs groupes fonctionnels choisis parmi les groupes acide carboxylique, anhydride d'acide, amide, imido, ester d'acide carboxylique, amino, époxy ou hydroxyle.

8. Mélange de polymères selon la revendication 1, **caractérisé par le fait qu'**il comprend, comme agent pour améliorer la résistance au choc des poly(éther de phénylène), un copolymère di- ou triséquencé d'un polydiène et d'un composé vinylaromatique, le copolymère séquencé étant non hydrogéné ou partiellement hydrogéné ou comprenant du polybutadiène.

9. Mélange de polymères selon la revendication 1, **caractérisé par le fait que** le poly(éther de phénylène) a été remplacé en totalité ou en partie par un agent décrit sous B) dans la revendication 1.

10. Mélange de polymères selon la revendication 1, **caractérisé par le fait qu'**il comprend un polyamide-6,6 comme polyamide.

11. Mélange de polymères selon la revendication 1, **caractérisé par le fait qu'**il comprend un poly(1,4-éther de 2,6-diméthylphénylène) comme poly(éther de phénylène).

12. Mélange de polymères selon la revendication 1, **caractérisé par le fait qu'**en plus des constituants précités, il comprend un ou plusieurs des composants suivants : homo- ou copolymères de styrène, polystyrène choc, colorants, pigments, charges de renfort, charges, stabilisants et agents ignifugeants.

13. Procédé pour préparer un mélange de polymères selon une ou plusieurs des revendications précédentes, dans lequel on mélange les divers constituants, à l'état fondu, en plusieurs étapes, **caractérisé par le fait que** l'on prémélange d'abord la totalité ou une partie du poly(éther de phénylène) à utiliser, avec l'agent améliorant la compatibilité et, facultativement, l'agent améliorant la résistance au choc du poly(éther de phénylène), après quoi on mélange le prémélange obtenu avec les constituants restants.

14. Procédé pour préparer un mélange de polymères selon une ou plusieurs des revendications précédentes, **caractérisé par le fait que** l'on prémélange d'abord la totalité ou une partie du polyamide à utiliser, à l'état fondu, avec l'agent qui n'est pas particulièrement approprié pour améliorer la résistance au choc des poly(éther de phénylène), puis on mélange le prémélange obtenu, à l'état fondu, avec les constituants restants.

15. Procédé selon l'une des revendications 13 et 14, **caractérisé par le fait que** l'on mélange d'abord, à l'état fondu, la totalité ou une partie du polyamide à utiliser, avec l'agent qui n'est pas particulièrement approprié pour améliorer la résistance au choc des poly(éther de phénylène), on mélange, à l'état fondu, la totalité ou une partie du poly(éther de phénylène) à utiliser, avec l'agent améliorant la résistance au choc des poly(éther de phénylène) et avec l'agent améliorant la compatibilité, puis on mélange, à l'état fondu, les deux prémélanges obtenus et les constituants qui, éventuellement, n'ont pas encore été incorporés aux prémélanges.

16. Article moulé à partir d'un mélange de polymères selon les revendications 1 à 12 ou à partir d'un mélange de polymères obtenu selon le procédé des revendications 13 à 15.
